# EUROPEAN PATENT APPLICATION

(11) **EP 2 287 263 A1**
(43) Date of publication of application: **23.02.2011**
(21) Application number: 09754398.7
(22) Date of filing: 20.05.2009
(51) Int. Cl.: C09J 7/00, C09J 11/04, C09J 133/04

(54) **ACRYLIC PRESSURE-SENSITIVE ADHESIVE TAPE OR SHEET**

(30) Priority: 29.05.2008 JP 2008140387
(71) Applicant: Nitto Denko Corporation, Ibaraki-shi Osaka 567-8680 (JP)
(72) Inventor: HIROSE, Tetsuya, Ibaraki-shi Osaka 567-8680 (JP); INOKUCHI, Shinji, Ibaraki-shi Osaka 567-8680 (JP); NONAKA, Akiko, Ibaraki-shi Osaka 567-8680 (JP)
(74) Representative: Grünecker, Kinkeldey, Stockmair & Schwanhäusser Anwaltssozietät
(86) International application number: PCT/JP2009/002217
(87) International publication number: WO 2009/144889

(57) **Abstract**

Provided is an acrylic pressure-sensitive adhesive tape or sheet having high initial low-temperature adhesive strength.

The acrylic pressure-sensitive adhesive tape or sheet according to the present invention is **characterized by** having a bubble-mixed inorganic filler-containing acrylic pressure-sensitive adhesive layer containing an acrylic polymer formed from an acrylic monomer mixture containing an alkyl (meth)acrylate ester (a) having an alkyl group having a carbon number of 1 to 14 and a polar group-containing vinyl monomer (b) at a component rate [(a)/(b)] (by weight) of 95/5 to 91/9, an inorganic filler in the amount at a rate of 0.1 parts by weight or more and less than 2 parts by weight with respect to 100 parts by weight of the all monomer components forming the acrylic polymer and bubbles.

## Description

### [Technical Field]

The present invention relates to an acrylic pressure-sensitive adhesive tape or sheet, more specifically an acrylic pressure-sensitive adhesive tape or sheet for use for fixation of an automotive exterior part to an automobile coated plate, especially of a weather strip thereto.

### [Background Art]

Acrylic pressure-sensitive adhesive tapes or sheets (hereinafter, the "tapes or sheets" may be referred to simply as "tapes" or "sheets") have been used widely for fixation of automotive exterior parts to automobile coated plate. The pressure-sensitive adhesive tape used in such an application often contains an inorganic or organic filler added thereto for improvement in cohesive power and shear strength so that the parts can be resistant to its dead weight and repulsion, and also for improvement in processability and reduction of weight.

Examples of the inorganic fillers include silica, calcium carbonate, clay, titanium oxide, glass microspheres, alumina microspheres and the like (see Patent Documents 1 and 2). Alternatively, examples of the organic fillers include polyester beads, vinylidene chloride microspheres, acrylic microspheres and the like (see Patent Document 3).

However, the addition amount of the inorganic filler used as filler in common compositions for exterior pressure-sensitive adhesive tapes is relatively larger, leading to deterioration in adhesiveness by exposure of non-adhesiveness particles on the sheet surface, and the decrease in adhesiveness becomes more significant under low-pressurization condition at low temperature. Because automotive exterior parts (such as moldings, emblems, and others) are generally rigid and the force applied when a tape is pressed for example to an automobile coated plate via a part acts directly, it is possible to avoid the decrease in adhesiveness described above by sufficient pressurization. However in the case of soft and hollow rubber parts such as door weather strips, the pressure applied to the parts is dispersed and relaxed by the parts, possibly prohibiting transmission of sufficient force to the adhesion interface and leading to unfavorable fixation.

### [Citation List]

### [Patent Literature]

Patent Document 1: Japanese Unexamined Patent Application No. 4-248820
Patent Document 2: Japanese Examined Patent Application Publication No. 2-50145
Patent Document 3: Japanese Examined Patent Application Publication No. 8-32435

### [Summary of Invention]

### [Technical Problem]

Accordingly, an object of the present invention is to provide an acrylic pressure-sensitive adhesive tape or sheet showing favorable initial low-temperature adhesive strength.

### [Solution to Problem]

After intensive studies to achieve the object above, the inventors have found that it was possible to obtain a favorable initial low-temperature adhesive strength, by using an acrylic pressure-sensitive adhesive tape or sheet, characterized by having a bubble-mixed inorganic filler-containing acrylic pressure-sensitive adhesive layer containing an acrylic polymer formed from an acrylic monomer mixture containing an alkyl (meth)acrylate (a) having an alkyl group having a carbon number of 1 to 14 and a polar group-containing vinyl monomer (b) at a component rate [(a)/(b)] (by weight) of 95/5 to 91/9, an inorganic filler in the amount at a rate of 0.1 parts by weight or more and less than 2 parts by weight with respect to 100 parts by weight of the all monomer components forming the acrylic polymer, and bubbles, as the pressure-sensitive adhesive layer of the pressure-sensitive adhesive tape or sheet, and made the present invention.

Thus, the present invention provides an acrylic pressure-sensitive adhesive tape or sheet, characterized by having a bubble-mixed inorganic filler-containing acrylic pressure-sensitive adhesive layer containing an acrylic polymer formed from an acrylic monomer mixture containing an alkyl (meth)acrylate ester (a) having an alkyl group having a carbon number of 1 to 14 and a polar group-containing vinyl monomer (b) at a component rate [(a)/(b)] (by weight) of 95/5 to 91/9, an inorganic filler in the amount at a rate of 0.1 parts by weight or more and less than 2 parts by weight with respect to 100 parts by weight of the all monomer components forming the acrylic polymer and bubbles.

The inorganic filler is preferably at least one inorganic filler selected from the group consisting of hydrophobic silica and hollow glass microspheres.

The at least one polar group-containing vinyl monomer (b) is preferably acrylic acid.

The acrylic pressure-sensitive adhesive tape or sheet is preferably used for fixation of an automotive exterior part to automobile coated plate. In particular, the automobile exterior part is preferably a weather strip.

### [Advantageous Effect of Invention]

The acrylic pressure-sensitive adhesive tape according to the present invention or sheet in the configuration above has favorable initial low-temperature adhesive strength.

### [Description of Embodiments]

The acrylic pressure-sensitive adhesive tape according to the present invention at least has a bubble-mixed inorganic filler-containing acrylic pressure-sensitive adhesive layer containing: an acrylic polymer formed from an acrylic monomer mixture containing an alkyl (meth)acrylate (a) having an alkyl group having a carbon number of 1 to 14 and a polar group-containing vinyl monomer (b) at a component rate of (a) to (b) [(a)/(b)] (by weight) of 95/5 to 91/9; an inorganic filler in the amount at a rate of 0.1 parts by weight or more and less than 2 parts by weight with respect to 100 parts by weight of all monomer components forming the acrylic polymer; and bubbles.

The acrylic pressure-sensitive adhesive tape according to the present invention may be in the form of a double-sided pressure-sensitive adhesive tape having a pressure-sensitive adhesive face (tacky face) on both faces or in the form of a single-faced pressure-sensitive adhesive tape having a pressure-sensitive adhesive face (tacky face) only on one face.

When the acrylic pressure-sensitive adhesive tape according to the present invention is in the form of a double-sided pressure-sensitive adhesive tape, for example, an acrylic double-sided pressure-sensitive adhesive tape made only of a pressure-sensitive adhesive layer at least having a bubble-mixed inorganic filler-containing acrylic pressure-sensitive adhesive layer (referred to as "base-less(carrier-less) acrylic double-sided pressure-sensitive adhesive tape") or an acrylic double-sided pressure-sensitive adhesive tape having a bubble-mixed inorganic filler-containing acrylic pressure-sensitive adhesive layer formed at least on one face of a base(carrier) (referred to as "base-bound(base-supported) acrylic double-sided pressure-sensitive adhesive tape").

The base-less acrylic double-sided pressure-sensitive adhesive tape may be, for example, a base-less acrylic double-sided pressure-sensitive adhesive tape having a pressure-sensitive adhesive layer made only of a bubble-mixed inorganic filler-containing acrylic pressure-sensitive adhesive layer, a base-less acrylic double-sided pressure-sensitive adhesive tape having a pressure-sensitive adhesive layer of a multi layer structure of a bubble-mixed inorganic filler-containing acrylic pressure-sensitive adhesive layer and a non-bubble-containing pressure-sensitive adhesive layer (referred to as "bubble-free pressure-sensitive adhesive layer"), or the like. The base-bound acrylic double-sided pressure-sensitive adhesive tape may be, for example, a base-bound acrylic double-sided pressure-sensitive adhesive tape having a bubble-mixed inorganic filler-containing acrylic pressure-sensitive adhesive layer formed on both faces of the base, a base-bound acrylic double-sided pressure-sensitive adhesive tape having a bubble-mixed inorganic filler-containing acrylic pressure-sensitive adhesive layer formed on one face of the base and a bubble-free pressure-sensitive adhesive layer formed on the other face of the base or the like.

The acrylic pressure-sensitive adhesive tape according to the present invention may be a single separator-type adhesive tape having the pressure-sensitive adhesive face protected only with one separator (release liner) or a double separator-type adhesive tape having the pressure-sensitive adhesive face protected with two separators.

In addition, the acrylic pressure-sensitive adhesive tape may be formed as it is wound around a roll or in the form in which the sheets are stacked. More specifically, the acrylic pressure-sensitive adhesive tape according to the present invention may have a form such as of sheet or tape. When the acrylic pressure-sensitive adhesive tape has a form wound around a roll, for example, the pressure-sensitive adhesive layer, such as the bubble-mixed inorganic filler-containing acrylic pressure-sensitive adhesive layer, may be prepared in the shape wound around a roll, as it is protected with a release coating layer formed on the rear-face side of the separator or base.

The acrylic pressure-sensitive adhesive tape according to the present invention may have other layers (such as intermediate layer and undercoat layer) in the range that does not impair the advantageous effects of the invention.

### (Bubble-mixed inorganic filler-containing acrylic pressure-sensitive adhesive layer)

The bubble-mixed inorganic filler-containing acrylic pressure-sensitive adhesive layer (bubble-mixed inorganic filler-containing acrylic adhesive layer), which has a bubble structure containing bubbles, is compatible with curved and irregular surfaces and also with followed flexing of the adherend and thus adheres to the adherend reliably via a sufficiently large adhesion area and can show high shear adhesive strength and repulsion resistance, because it is superior in stress relaxation property.

The bubbles contained in the bubble-mixed inorganic filler-containing acrylic pressure-sensitive adhesive layer are desirably, essentially closed cell-type bubbles, but may be a mixture of closed cell-type bubbles and open cell-type bubbles.

The bubble normally has a spherical shape (in particular, completely spherical shape), but may have an irregular-shaped spherical shape. The average bubble diameter of the bubbles is not particularly limited, but can be selected, for example, in the range of 1 to 1000 µm (preferably 10 to 500 µm, more preferably 30 to 300 µm).

The gas component (bubble-forming gas component; referred to as "bubble-forming gas") contained in the bubble is not particularly limited, and various gas components including air and inert gases such as nitrogen, carbon dioxide and argon can be used. If reactions such as polymerization reaction are carried out in the presence of the bubble-forming gas, it is important to use a bubble-forming gas that does not inhibit the reactions. The bubble-forming gas is preferably nitrogen, from the viewpoints of reaction inhibition and cost.

The amount of the bubbles in the bubble-mixed inorganic filler-containing acrylic pressure-sensitive adhesive layer is not particularly limited and may vary according to the application of the acrylic pressure-sensitive adhesive tape used, but may be, for example, 10 % or more (preferably 11 % or more, more preferably 12 % or more) with respect to the total volume of the bubble-mixed inorganic filler-containing acrylic pressure-sensitive adhesive layer. The maximum amount of the bubbles in the bubble-mixed inorganic filler-containing acrylic pressure-sensitive adhesive layer is not particularly limited, and may be, for example, 50 % or less (preferably 40 % or less, more preferably 30 % or less).

The form of the bubbles formed in such a bubble-mixed inorganic filler-containing acrylic pressure-sensitive adhesive layer is not particularly limited. The bubble-mixed inorganic filler-containing acrylic pressure-sensitive adhesive layer is, for example, (1) a bubble-mixed inorganic filler-containing acrylic pressure-sensitive adhesive layer in the form in which the bubbles are formed by using an acrylic monomer mixture (hereinafter, referred to as "bubble-mixed acrylic monomer mixture") containing a bubble-forming gas component (bubble-forming gas) previously mixed or (2) a bubble-mixed inorganic filler-containing acrylic pressure-sensitive adhesive layer in the form in which the bubbles are formed by using an acrylic monomer mixture containing a foaming agent. In the present invention, the bubble-mixed inorganic filler-containing acrylic pressure-sensitive adhesive layer is preferably a bubble-mixed inorganic filler-containing acrylic pressure-sensitive adhesive layer in which the bubbles are formed by using a bubble-mixed acrylic monomer mixture. The amount of the bubbles in the bubble-mixed acrylic monomer mixture can be selected properly in the range suitable for the amount of the bubbles in the bubble-mixed inorganic filler-containing acrylic pressure-sensitive adhesive layer.

The bubble-mixed inorganic filler-containing acrylic pressure-sensitive adhesive layer contains, normally as its base polymer, an acrylic polymer formed from an acrylic monomer mixture containing an alkyl (meth)acrylate ester (a) having an alkyl group having a carbon number of 1 to 14 as the principal monomer component and at least one polar group-containing vinyl monomer (b) as the copolymerizable monomer.

The component rate of the alkyl (meth)acrylate ester (a) having an alkyl group having a carbon number of 1 to 14 to the polar group-containing vinyl monomer (b), [(a)/(b)], in the acrylic monomer mixture forming the acrylic polymer is 95/5 to 91/9 (preferably 94/6 to 91/9, more preferably 94/6 to 92/8) by weight. When the polar group-containing vinyl monomer (b) is used in the acrylic polymer-forming acrylic monomer mixture, in an amount more than the ratio of the alkyl (meth)acrylate ester (a) having an alkyl group having a carbon number of 1 to 14 to the polar group-containing vinyl monomer (b), (a)/(b), of 91/9 by weight (in other words, when the content of the polar group-containing vinyl monomer (b) is larger than the range above), the bubble-mixed inorganic filler-containing acrylic pressure-sensitive adhesive layer may become harder, leading to deterioration in low temperature adhesiveness. Alternatively, when the polar group-containing vinyl monomer (b) is used in the acrylic polymer-forming acrylic monomer mixture, in an amount less than the ratio of the alkyl (meth)acrylate ester (a) having an alkyl group having a carbon number of 1 to 14 to the polar group-containing vinyl monomer (b), (a)/(b), of 95/5 by weight (in other words, when the content of the polar group-containing vinyl monomer (b) is smaller than the range above), the bubble-mixed inorganic filler-containing acrylic pressure-sensitive adhesive layer may show deterioration in cohesive power and also in adhesiveness under ambient atmosphere.

The total rate of the a alkyl (meth)acrylate ester (a) having an alkyl group having a carbon number of 1 to 14 and the polar group-containing vinyl monomer (b) in the total amount of the acrylic polymer-forming monomer components is 90 wt % or more (preferably 95 wt % or more).

The alkyl (meth)acrylate ester (a) having an alkyl group having a carbon number of 1 to 14 is normally a straight- or branched-chain linear alkyl (meth)acrylate ester containing an alkyl group having a carbon number of 1 to 14, and examples thereof include methyl (meth)acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, isopentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate and the like. Among them, alkyl (meth)acrylate esters containing a straight- or branched-chain linear alkyl group having a carbon number of 2 to 10 are preferable, and 2-ethylhexyl (meth)acrylate and isooctyl (meth)acrylate are particularly preferable. The alkyl (meth)acrylate ester (a) having an alkyl group having a carbon number of 1 to 14 may be used alone or in combination of two or more. The term "(meth)acrylic" means "acrylic and/or methacrylic".

Examples of the polar group-containing vinyl monomers (b) include carboxyl group-containing monomers such as (meth)acrylic acid, itaconic acid, maleic acid, fumaric acid, crotonic acid and isocrotonic acid or the anhydrides thereof (such as maleic anhydride); hydroxyl group-containing monomers such as hydroxyalkyl (meth)acrylate (such as hydroxyethyl (meth)acrylate, hydroxypropyl (meth)acrylate and hydroxybutyl (meth)acrylate); amide group-containing monomers such as acrylamide, methacrylamide, N,N-dimethyl(meth)acrylamide, N-methylol(meth)acrylamide, N-methoxy methyl(meth)acrylamide and N-butoxymethyl(meth)acrylamide; amino-group-containing monomers such as aminoethyl (meth)acrylate, dimethylaminoethyl (meth)acrylate and t-butylaminoethyl (meth)acrylate; glycidyl group-containing monomers such as glycidyl (meth)acrylate and methylglycidyl (meth)acrylate; cyano group-containing monomers such as acrylonitrile and methacrylonitrile, heterocyclic ring-containing vinyl monomers such as N-vinyl-2-pyrrolidone, (meth)acryloylmorpholine, N-vinylpyridine, N-vinylpiperidone, N-vinylpyrimidine, N-vinylpiperazine, N-vinylpyrazine, N-vinylpyrrole, N-vinylimidazole and N-vinyloxazole; and the like. The polar group-containing vinyl monomer (b) is preferably a carboxyl group-containing monomer or the anhydride thereof, and acrylic acid is particularly preferable. The polar group-containing vinyl monomers (b) may be used alone or in combination of two or more.

In addition, copolymerizable monomers such as polyfunctional monomers may be used as a monomer component of the acrylic polymer.

Examples of the polyfunctional monomers include hexanediol di(meth)acrylate, butanediol di(meth)acrylate, (poly)ethylene glycol di(meth)acrylate, (poly)propylene glycol di(meth)acrylate, neopentylglycol di(meth)acrylate, pentaerythritol di(meth)acrylate, pentaerythritol tri(meth)acrylate, dipentaerythritol hexa(meth)acrylate, trimethylolpropane tri(meth)acrylate, tetramethylolmethane tri(meth)acrylate, allyl (meth)acrylate, vinyl (meth)acrylate, divinylbenzene, epoxy acrylates, polyester acrylates, urethane acrylates and the like.

The amount of the polyfunctional monomers used is 2 wt % or less (for example, 0.01 to 2 wt %), preferably 0.02 to 1 wt %, with respect to the total amount of the acrylic polymer-forming monomer components. When the amount of the polyfunctional monomers used is more than 2 wt % with respect to the total amount of the acrylic polymer-forming monomer components, the cohesive power of the bubble-mixed inorganic filler-containing acrylic pressure-sensitive adhesive, for example, may increase excessively, leading to deterioration in pressure-sensitive adhesiveness. Alternatively when the amount of the polyfunctional monomers used is too low (for example, less than 0.01 wt % with respect to the total amount of the acrylic polymer-forming monomer components), for example, the cohesive power of the bubble-mixed inorganic filler-containing acrylic pressure-sensitive adhesive layer may decrease.

Examples of the copolymerizable monomers other than the polyfunctional monomers include (meth)acrylic esters other than the alkyl (meth)acrylates (a) having an alkyl group having a carbon number of 1 to 14 described above, including alicyclic hydrocarbon group-containing (meth)acrylic esters such as cyclopentyl (meth)acrylate, cyclohexyl (meth)acrylate and isobornyl (meth)acrylate and aromatic hydrocarbon group-containing (meth)acrylic esters such as phenyl (meth)acrylate; vinyl esters such as vinyl acetate and vinyl propionate; aromatic vinyl compounds such as styrene and vinyltoluene; olefins or dienes such as ethylene, butadiene, isoprene and isobutylene; vinyl ethers such as vinyl alkyl ethers; vinyl chloride and the like.

The acrylic polymer can be prepared by a known or common polymerization method. The polymerization method is, for example, solution polymerization, emulsion polymerization, bulk polymerization, photopolymerization or the like. Among the polymerization methods above, in the present invention, use of a curing reaction under heat or by irradiation with active energy ray in the presence of a polymerization initiator such as thermal or photopolymerization initiator in preparation of the acrylic polymer is preferable from the viewpoints of processability and stablilized production of bubble structure. It is thus preferable in the present invention to form an acrylic polymer by curing and polymerization by active energy ray irradiation of the acrylic monomer mixture containing at least an alkyl (meth)acrylate ester (a) having an alkyl group having a carbon number of 1 to 14, polar group-containing vinyl monomer (b), and a polymerization initiator or the partial polymer thereof.

Because the presence of a polymerization initiator (e.g., thermal polymerization or photopolymerization initiator), as described above, permits curing by heat or active energy ray, it is possible to form a bubble-mixed inorganic filler-containing acrylic pressure-sensitive adhesive layer having a structure in which bubbles are contained as stabilized, by forming the bubble-mixed inorganic filler-containing acrylic pressure-sensitive adhesive layer in the state, as it is cured when the bubbles are mixed with the acrylic monomer mixture.

In particular, use of a photopolymerization method of using a photopolymerization initiator as the polymerization initiator is preferable, because of the advantage that the polymerization period can be shortened.
It is thus preferable to form a bubble-mixed inorganic filler-containing acrylic pressure-sensitive adhesive layer having a stabilized bubble structure by polymerization with active energy ray. The polymerization initiators may be used alone or in combination of two or more.

Examples of the photopolymerization initiators include, but are not particularly limited, benzoin ether-based photopolymerization initiators, acetophenone-based photopolymerization initiators, α-ketol-based photopolymerization initiators, aromatic sulfonyl chloride-based photopolymerization initiators, optically active oxime-based photopolymerization initiators, benzoin-based photopolymerization initiators, benzyl-based photopolymerization initiators, benzophenone-based photopolymerization initiators, ketal-based photopolymerization initiators, thioxanthone-based photopolymerization initiators and the like.

Typical examples of the benzoin ether-based photopolymerization initiators include benzoin methyl ether, benzoin ethyl ether, benzoin propyl ether, benzoin isopropyl ether, benzoin isobutyl ether, 2,2-dimethoxy-1,2-diphenyl ethane-1-one, anisole methyl ether and the like. Examples of the acetophenone-based photopolymerization initiators include 2,2-diethoxyacetophenone, 2,2-dimethoxy-2-phenylacetophenone, 1-hydroxycyclohexylphenylketone, 4-phenoxydichloroacetophenone, 4-t-butyl-dichloroacetophenone and the like. Examples of the α-ketol-based photopolymerization initiators include 2-methyl-2-hydroxypropiophenone, 1-[4-(2-hydroxyethyl)-phenyl]-2-hydroxy-2-methylpropane-1-one and the like. Examples of the aromatic sulfonyl chloride-based photopolymerization initiators include 2-naphthalenesulfonyl chloride and the like. Examples of the optically active oxime-based photopolymerization initiators include 1-phenyl-1,1-propanedione-2-(o-ethoxycarbonyl)-oxime and the like.

Examples of benzoin-based photopolymerization initiators include benzoin and the like. Examples of the benzyl-based photopolymerization initiators include benzyl and the like. Examples of the benzophenone-based photopolymerization initiators include benzophenone, benzoylbenzoic acid, 3,3'-dimethyl-4-methoxybenzophenone, polyvinylbenzophenone, α-hydroxycyclohexylphenylketone and the like. Examples of the ketal-based photopolymerization initiators include benzyl dimethyl ketal and the like. Examples of the thioxanthone-based photopolymerization initiators include thioxanthone, 2-chlorothioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, dodecylthioxanthone and the like.

The amount of the photopolymerization initiator added is not particularly limited, if the acrylic polymer is prepared by photopolymerization, but can be selected, for example, in the range of 0.01 to 5 parts by weight (preferably 0.05 to 3 parts by weight) with respect to 100 parts by weight of the all monomers forming the acrylic polymer, i.e., the base polymer of the bubble-mixed inorganic filler-containing acrylic pressure-sensitive adhesive.

In activation of the photopolymerization initiator, it is important to irradiate the acrylic monomer mixture with active energy ray. Examples of the active energy ray include ionizing radiation rays such as α ray, β rays, γ ray, neutron beam and electron beam; ultraviolet ray; and the like, and in particular, ultraviolet ray is preferable. For example, the irradiation energy and the exposure period of the active energy ray are not particularly limited as long as they are suitable for activation of the photopolymerization initiator and induction of the reaction between monomer components.

Examples of the thermal polymerization initiators include azo-based polymerization initiators [such as 2,2'-azobisisobutylonitrile, 2,2'-azobis-2-methylbutylonitrile, dimethyl 2,2'-azobis(2-methylpropionate), 4,4'-azobis-4-cyanovalerianic acid, azobisisovaleronitrile, 2,2'-azobis(2-amidinopropane) dihydrochloride, 2,2'-azobis[2-(5-methyl-2-imidazolin-2-yl)propane] dihydrochloride, 2,2'-azobis(2-methylpropionamidine) disulfate salt and 2,2'-azobis(N,N'-dimethyleneisobutylamidine) dihydrochloride], peroxide-based polymerization initiators (such as dibenzoyl peroxide and tert-butyl permaleate), redox-based polymerization initiators and the like. The amount of the thermal polymerization initiator used is not particularly limited, if it is in the range usable traditionally as a thermal polymerization initiator.

Because the bubble-mixed inorganic filler-containing acrylic pressure-sensitive adhesive layer contains an inorganic filler, the bubble-mixed inorganic filler-containing acrylic pressure-sensitive adhesive layer has an improved cohesive power and also improved heat resistance.

The method of containing the inorganic filler into the bubble-mixed inorganic filler-containing acrylic pressure-sensitive adhesive layer is not particularly limited, and may be, for example, a method of forming a pressure-sensitive adhesive constituting the bubble-mixed inorganic filler containing acrylic pressure-sensitive adhesive layer and then blending and mixing an inorganic filler with the pressure-sensitive adhesive, or a method of blending and mixing an inorganic filler with an acrylic monomer mixture forming the acrylic polymer or the partial polymer thereof. In particular, the method of blending and mixing an inorganic filler with an acrylic monomer mixture forming the acrylic polymer or the partial polymer thereof is preferable from the viewpoint of processability.

Examples of the inorganic fillers include silica compounds such as hydrophobic silica, alumina, silicone (silicone powder), calcium carbonate, clay, titanium oxide, talc, layered silicate salts, clay mineral, glass, glass beads, glass balloons, alumina balloons, ceramic balloons, titanium white, titania, zirconia, carbons (such as carbon black, carbon nanotube, etc.), metal particles (such as of magnesium, aluminum, zirconium, silicon, calcium, titanium, vanadium, chromium, cobalt, nickel, copper, germanium, molybdenum, rhodium, silver, indium, tin, tungsten, iridium, platinum, iron, gold, etc.), metal oxide particles (such as of iron oxide, indium oxide, stannic oxide, chromium oxide, nickel oxide, copper oxide, titanium oxide, zirconium oxide, aluminum oxide, zinc oxide, antimony oxide, calcium oxide, cadmium oxide, etc.) and the like. Alternatively, the inorganic filler may be a silica gel supporting a metal oxide (such as the metal oxide described above, in particular for example titanium oxide). Yet alternatively, hollow inorganic microspheres may be used. The inorganic fillers can be used alone or in combination of two or more.

Preferable among them for reduction in weight are silica compounds such as hydrophobic silica and also hollow inorganic microspheres including hollow glass microspheres such as hollow glass balloons, hollow balloon metal compounds such as hollow alumina balloons and ceramic hollow balloons such as hollow ceramic balloons, and particularly preferably are hollow glass microspheres. It is possible, by using such a silica compound or hollow inorganic microspheres, to make the bubble-mixed inorganic filler-containing acrylic pressure-sensitive adhesive layer satisfy the lowest requirement in strength as a pressure-sensitive adhesive.

The particle diameter (average particle diameter) of the hollow inorganic microspheres is not particularly limited, but can be selected, for example, in the range of 1 to 500 µm (preferably 5 to 200 µm, more preferably 10 to 100 µm).

The specific gravity of the hollow inorganic microspheres is not particularly limited, but can be selected, for example, in the range of 0.1 to 0.8 g/cm³ (preferably 0.12 to 0.5 g/cm³). If the specific gravity of the hollow inorganic microspheres less than 0.1 g/cm³, the hollow inorganic microspheres float easily when the hollow inorganic microspheres are blended and mixed with the pressure-sensitive adhesive or the composition containing the acrylic mixtures or the partial polymer thereof, prohibiting uniform dispersion of the hollow inorganic microspheres. On the other hand, a specific gravity of more than 0.8 g/cm³ leads to increase in cost, only giving a more expensive bubble-mixed inorganic filler-containing acrylic pressure-sensitive adhesive layer.

Various surface treatments (such as surface tension-reducing treatment by using a silicone- or fluorine-based compound) may be applied to the surface of the hollow inorganic microspheres.

The amount of the inorganic filler used can be selected in the range of 0.1 parts by weight or more and less than 2 parts by weight, preferably 0.1 parts by weight or more and less than 0.7 parts by weight, with respect to 100 parts by weight of the all monomer components forming the acrylic polymer, i.e., the base polymer of the bubble-mixed inorganic filler-containing acrylic pressure-sensitive adhesive layer. When the amount of the inorganic filler used is less than 0.1 parts by weight with respect to 100 parts by weight of the all monomer components forming the acrylic polymer, i.e., the base polymer of the bubble-mixed inorganic filler-containing acrylic pressure-sensitive adhesive layer, the bubbles may not be formed as they are finely dispersed. Alternatively when it is an amount of more than 2 parts by weight or more, there may be formed irregularity at the interface between the bubble-mixed inorganic filler-containing acrylic pressure-sensitive adhesive layer and the adherend, possibly leading to reduction of adhesion area and deterioration in adhesive strength during use of the acrylic pressure-sensitive adhesive tape.

The bubble-mixed inorganic filler-containing acrylic pressure-sensitive adhesive layer may contain additionally additives suitable for the application of the acrylic pressure-sensitive adhesive tape.

Addition of a surfactant is preferable in the present invention, for example, for reduction of the adhesiveness and friction resistance between the inorganic filler and the polymer and improvement of the mixing efficiency and stability of the bubbles and others. Such a surfactant may be, for example, an ionic surfactant, a silicone-based surfactant, a fluorochemical surfactant. In particular, fluorochemical surfactants are preferably, and fluorochemical surfactants having an oxy-C₂₋₃ alkylene group and a fluorinated hydrocarbon group in the molecule are used favorably. Further among them, non-ionic surfactants are preferable from the viewpoint of dispersion efficiency in the base polymer. The fluorochemical surfactants may be used alone or in combination of two or more. The fluorochemical surfactants described in JP-A No.2006-022189 are used favorably as the fluorochemical surfactants.

The fluorochemical surfactant for use may be a commercial product and, for example, "Surflon S-393" (trade mark, manufactured by Seimi Chemicals Co., Ltd.) is used favorably.

Examples of the other additives include crosslinking agents (such as polyisocyanate-based crosslinking agents, silicone-based crosslinking agents, epoxy-based crosslinking agents, alkyl-etherified melamine-based crosslinking agents and others), tackifiers (resins solid, semisolid or liquid at room temperature such as rosin-derived resins, polyterpene resins, petroleum resins and oil-soluble phenol resins), plasticizers, fillers other than the inorganic fillers above, aging inhibitors, antioxidants, colorants (pigments, dyes and others) and the like.

When the acrylic polymer, i.e., the base polymer for the bubble-mixed inorganic filler-containing acrylic pressure-sensitive adhesive layer, is formed for example, by curing and polymerization of an acrylic monomer mixture or the partial polymer thereof at least containing an alkyl (meth)acrylate ester (a) having an alkyl group having a carbon number of 1 to 14, a polar group-containing vinyl monomer (b) and a photopolymerization initiator by radiation of active energy ray, a pigment (color pigment) may be used for coloring the bubble-mixed inorganic filler-containing acrylic pressure-sensitive adhesive layer, in an amount that does not inhibit the photopolymerization reaction. When the bubble-mixed inorganic filler-containing acrylic pressure-sensitive adhesive layer is desirably colored in black, carbon black may be used as the color pigment. The amount of the carbon black used is desirably selected, for example, in the range of 0.15 parts by weight or less (for example, 0.001 to 0.15 parts by weight), preferably 0.02 to 0.1 parts by weight, with respect to 100 parts by weight of all monomer components forming the acrylic polymer, i.e., the base polymer for the bubble-mixed inorganic filler-containing acrylic pressure-sensitive adhesive layer, from the viewpoint of chromaticity and for inhibition of the photopolymerization reaction.

When the bubble-mixed inorganic filler-containing acrylic pressure-sensitive adhesive layer is a bubble-mixed inorganic filler-containing acrylic pressure-sensitive adhesive layer in the form having bubbles formed therein by using a foaming agent-containing acrylic monomer mixture, the foaming agent is not particularly limited, but can be selected suitably, for example, from known foaming agents. The foaming agent used may be, for example, thermally expandable microspheres.

In the present invention, when the bubble-mixed inorganic filler-containing acrylic pressure-sensitive adhesive layer is a bubble-mixed inorganic filler-containing acrylic pressure-sensitive adhesive layer in the form having bubbles formed therein by using a bubble-mixed acrylic monomer mixture, it is preferable to blend and mix the bubbles as the last component to be blended to the bubble-mixed acrylic monomer mixture, in particular to raise the viscosity of the acrylic monomer mixture before mixing with the bubbles, for stabilized dispersion of the bubbles in the bubble-mixed inorganic filler-containing acrylic pressure-sensitive adhesive layer. The viscosity is not particularly limited, if it is a viscosity allowing consistent presence of the mixed bubbles, and the viscosity, as determined for example by using a BH viscometer (rotor: No. 5 rotor) under the condition of a rotating speed of 10 rpm and a measurement temperature of 30°C, is desirably 5 to 50 Pa·s (preferably 10 to 40 Pa·s). When the viscosity (BH viscometer, No.5 rotor, 10 rpm, 30°C) is less than 5 Pa·s, the mixed bubbles may coalesce and thus be removed from the system, because the viscosity is too low. On the other hand, when the viscosity is more than 50 Pa·s, it may be difficult to form the bubble-mixed inorganic filler-containing acrylic pressure-sensitive adhesive layer, because the viscosity is too high.

The viscosity of the acrylic monomer mixture before mixing with bubbles can be adjusted, for example, by a method of blending various polymer components such as acrylic rubbers and thickening additives or a method of partially polymerizing the monomer components for forming the acrylic polymer, i.e., the base polymer of the pressure-sensitive adhesive. Specifically, it is, for example, a method of blending a polymerization initiator (for example, photopolymerization initiator) with an acrylic monomer mixture at least containing an alkyl (meth)acrylate (a) having a carbon number of 1 to 14 and a polar group-containing vinyl monomer (b), and preparing a polymerized composition (sirup) by polymerization of only part of the monomer components by carrying out polymerization reaction of the monomer mixture according to the kind to the polymerization initiator.

In the present invention, it is possible to prepare an inorganic filler-containing acrylic pressure-sensitive adhesive composition having a viscosity suitable for keeping the bubbles dispersed consistently by blending an inorganic filler and, as needed, various additives with the sirup. It is thus possible to obtain a bubble-mixed inorganic filler-containing acrylic pressure-sensitive adhesive composition by introducing and mixing bubbles with the inorganic filler-containing acrylic pressure-sensitive adhesive composition.

The method of mixing bubbles is not particularly limited, and a known bubble-mixing method can be used. An example of an apparatus for mixing bubbles is an apparatus equipped with a disk having a through-hole at the center and a stator having many small gears and a rotor having many small gears similar to those of the stator, which faces each other, on the disk. In the apparatus, it is possible to obtain a bubble-mixed inorganic filler-containing acrylic pressure-sensitive adhesive composition containing bubbles and an inorganic filler, in which the bubbles of the bubble-forming gas are dispersed and mixed finely in the inorganic filler-containing acrylic pressure-sensitive adhesive composition, for example, by introducing an inorganic filler-containing acrylic pressure-sensitive adhesive composition into the space between the gears of the stator and the gears of the rotor and introducing a bubble-forming gas component (bubble-forming gas) through the through-hole into the inorganic filler-containing acrylic pressure-sensitive adhesive composition, while the rotor is rotated at high speed.

It is preferable for suppression or prevention of the coalescence of bubbles to carry out the steps of from bubble mixing to formation of the bubble-mixed inorganic filler-containing acrylic pressure-sensitive adhesive layer continuously as a series of steps. Specifically, the bubble-mixed inorganic filler-containing acrylic pressure-sensitive adhesive layer is preferably formed, by using a known method of forming a pressure-sensitive adhesive layer and by using the bubble-mixed inorganic filler-containing acrylic pressure-sensitive adhesive composition that is prepared previously by bubble mixing as described above. More specifically, it is possible to form a bubble-mixed inorganic filler-containing acrylic pressure-sensitive adhesive layer, for example, by coating the bubble-mixed inorganic filler-containing acrylic pressure-sensitive adhesive composition on a particular face, and drying and curing the coated layer as needed. In formation of the bubble-mixed inorganic filler-containing acrylic pressure-sensitive adhesive layer, it is preferable, as described above, to cure the layer by heating or irradiation with active energy ray. It is thus possible to form a bubble-mixed inorganic filler-containing acrylic pressure-sensitive adhesive layer favorably by using a bubble-mixed inorganic filler-containing acrylic pressure-sensitive adhesive composition containing a polymerization, initiator such as thermal polymerization initiator or photopolymerization initiator, and coating the bubble-mixed filler-containing acrylic pressure-sensitive adhesive composition on a particular face, and curing the coated layer by heating or irradiation with active energy ray in the state in which bubbles are kept firmly.

The bubble-mixed inorganic filler-containing acrylic pressure-sensitive adhesive layer may have a single-layer shape or a multi-layer shape. The thickness of the bubble-mixed inorganic filler-containing acrylic pressure-sensitive adhesive layer is not particularly limited, but can be selected, for example, in the range of 200 to 5000 µm (preferably 300 to 4000 pm, more preferably 400 to 3000 µm). A thickness of the bubble-mixed inorganic filler-containing acrylic pressure-sensitive adhesive layer at less than 200 µm leads to deterioration in cushioning property and adhesiveness to curved or irregular surface, while a thickness of more than 5000 µm prohibits preparation of the layer with uniform thickness.

### (Base)

When the acrylic pressure-sensitive adhesive tape according to the present invention is a base-bound acrylic pressure-sensitive adhesive tape, examples of the bases include, but are not particularly limited to, sheet-shaped materials such as paper-based bases such as paper; fiber-based bases such as woven and nonwoven fabrics and nets (examples of the favorable raw materials thereof include, but are is not particularly limited to, manila hemp, rayon, polyester, pulp fiber and others metal-based bases such as metal foils and metal plates; plastic-based bases such as plastic films and sheets; rubber-based bases such as rubber sheets; foams such as foam sheets, and the laminated films thereof (such as laminated films of a plastic-based base and another base and laminated films of multiple plastic films (or sheets)). The base favorable for use is a plastic-based base such as plastic film or sheet. Examples of the raw materials for the plastic film or sheet include olefinic resins containing an α-olefin as the monomer component such as polyethylene (PE), polypropylene (PP), ethylene-propylene copolymers and ethylene-vinyl acetate (EVA) copolymers; polyester resins such as polyethylene terephthalate (PET), polyethylene naphthalate (PEN) and polybutylene terephthalate (PBT); polyvinyl chloride (PVC); vinyl acetate resins; polyphenylene sulfide (PPS); amide resins such as polyamides (nylon) and wholly aromatic polyamides (aramide); polyimide resins; polyether ether ketone (PEEK) and the like. These raw materials may be used alone or in combination of two or more.

When a plastic-based base is used as the base, it may be previously stretched for regulation, for example, of the deformation efficiency such as elongation. When the bubble-mixed inorganic filler-containing acrylic pressure-sensitive adhesive layer is prepared by curing by active energy ray, the base used is preferably a material that does not inhibit transmission of the active energy ray.

For improvement in adhesiveness for example to the bubble-mixed inorganic filler-containing acrylic pressure-sensitive adhesive layer, the surface of the base may be subjected to common surface treatment. For example, it may be oxidized chemically or physically, for example, by corona treatment, chromate treatment, ozone exposure, flame exposure, high-pressure electric shock exposure or ionizing radiation treatment or may be coated, for example, with an undercoat or release agent.

The thickness of the base is selected suitably, for example, according to the strength, flexibility and application and, for example, generally 1000 µm or less (for example, 1 to 1000 µm), preferably approximately 1 to 500 µm and more preferably 3 to 300 pm, but the thickness is not limited thereto. The base may have a single-layer form or a multi-layer form.

### (Bubble-free pressure-sensitive adhesive layer)

The bubble-free pressure-sensitive adhesive layer is prepared by a known method of preparing a pressure-sensitive adhesive layer, for example, by using a known pressure-sensitive adhesive (such as acrylic pressure-sensitive adhesive, rubber-based pressure-sensitive adhesive, vinyl alkyl ether-based pressure-sensitive adhesive, silicone-based pressure-sensitive adhesive, polyester-based pressure-sensitive adhesive, polyamine-based pressure-sensitive adhesive, urethane-based pressure-sensitive adhesive, fluorine-based pressure-sensitive adhesive or epoxy-based pressure-sensitive adhesive and the like). The thickness of the bubble-free pressure-sensitive adhesive layer is not particularly limited and selected suitably, for example, according to application and use method.

### (Separator)

In the present invention, a separator (release liner) may be used additionally for protection of the tacky face of the pressure-sensitive adhesive layer such as the bubble-mixed inorganic filler-containing acrylic pressure-sensitive adhesive layer and the bubble-free pressure-sensitive adhesive layer. The separator may not be used. The separator is removed before the tacky face protected by the separator is used (i.e., when the pressure-sensitive adhesive layer protected by the separator is bonded to an adherend).

For example, a common liner can be used as the separator. Specifically, for example, a base having a release coating layer treated with a release coating agent at least on one surface thereof, a low-adhesiveness base of a fluorochemical polymer (such as polytetrafluoroethylene, polychloro-trifluoroethylene, poly vinyl fluoride, polyvinylidene fluoride, a tetrafluoroethylene-hexafluoropropylene copolymer or a chlorofluoroethylene-vinylidene fluoride copolymer), or a low-adhesiveness base of a nonpolar polymer (such as an olefinic resin such as polyethylene or polypropylene) can be used as the separator. The separator can also be used as the base for support of the pressure-sensitive adhesive layer such as the bubble-mixed inorganic filler-containing acrylic pressure-sensitive adhesive layer.

For example, a separator having a release coating layer at least on one face of a release liner base can be used favorably as the separator. Examples of the bases for release liner include plastic bases (synthetic resin films) such as polyester films (polyethylene terephthalate film, etc.), olefinic resin films (polyethylene film, polypropylene film, etc.), polyvinyl chloride films, polyimide films, polyamide films (nylon film) and rayon films; papers (such as woodfree paper, Japanese paper, Kraft paper, glassine paper, synthetic paper and topcoat paper); the laminates thereof prepared, for example, by lamination or coextrusion (2- to 3-layered composites); and the like.

On the other hand, the release coating agent constituting the release coating layer is not particularly limited, and examples thereof include silicone-based release coating agents, fluorine-based release coating agents, long-chain alkyl-based release coating agents and the like. The release coating agents may be used alone or in combination of two or more.

The thickness and the preparative method of the separator are not particularly limited.

### [Acrylic pressure-sensitive adhesive tape]

The acrylic pressure-sensitive adhesive tape according to the present invention can be prepared by a known or common method of producing a pressure-sensitive adhesive tape. For example, a base-bound acrylic pressure-sensitive adhesive tape having a bubble-mixed inorganic filler-containing acrylic pressure-sensitive adhesive layer on one side of a base can be prepared by forming a bubble-mixed inorganic filler-containing acrylic pressure-sensitive adhesive composition layer by coating a bubble-mixed inorganic filler-containing acrylic pressure-sensitive adhesive composition containing bubbles and an inorganic filler on one side of a base, and then forming a bubble-mixed inorganic filler-containing acrylic pressure-sensitive adhesive layer by polymerization of the bubble-mixed inorganic filler-containing acrylic pressure-sensitive adhesive composition layer. It can also be prepared by transferring a bubble-mixed inorganic filler-containing acrylic pressure-sensitive adhesive layer formed on the release coating layer of a separator onto one side of a base.

A base-less acrylic double-sided pressure-sensitive adhesive tape having only a bubble-mixed inorganic filler-containing acrylic pressure-sensitive adhesive can be prepared by forming a bubble-mixed inorganic filler-containing acrylic pressure-sensitive adhesive composition layer by coating a bubble-mixed inorganic filler-containing acrylic pressure-sensitive adhesive composition on the release coating layer of a separator, and then forming a bubble-mixed inorganic filler-containing acrylic pressure-sensitive adhesive layer by polymerization of the bubble-mixed inorganic filler-containing acrylic pressure-sensitive adhesive composition layer.

Because such an acrylic pressure-sensitive adhesive tape has bubble-mixed inorganic filler-containing acrylic pressure-sensitive adhesive layer, it is superior in initial adhesiveness at low temperature (for example, at a temperature of about -20 to 5°C), shows high repulsion resistance, has an adhesion area sufficient for adhesion because it is compatible with curved and irregular surfaces and with flexing of the adherend, due to improvement in stress relaxation by the bubbles, and shows high shear adhesive strength and repulsion resistance because it is superior in stress relaxation property (stress dispersion property).

The acrylic pressure-sensitive adhesive tape according to the present invention is superior in initial adhesiveness to hard-to-adhere adherends such as coatings (such as acid-rain resistant coatings and automotive coatings), paint plates, resin plates, metal plates such as steel plates and coated plates (such as resin plates and metal plates (such as steel plates) having a coating such as acid rain-resistant coating or automotive coating). In particular, it is superior in initial adhesiveness to automotive coated plates such as automotive body.

Examples of the adherend coatings include, but are not particularly limited to, various coatings such as polyester-melamine-based, alkyd-melamine-based, acrylic-melamine-based, acrylic-urethane-based and acrylic-polyacid-curing agent-based coatings.

The shape of the hard-to-adhere adherend, to which the acrylic pressure-sensitive adhesive tape according to the present invention is used, is also not particularly limited. For example, the hard-to-adhere adherend may be an adherend in the shape having a flat or three-dimensional curved surface or a coated molding in the shape having a flat three-dimensional curved surface.

The acrylic pressure-sensitive adhesive tape according to the present invention can be used, for example, for protection of coating or decoration of an automobile coated plate, as it is bonded thereto. The acrylic pressure-sensitive adhesive tape according to the present invention can also be used for connection and fixation of an article to the automotive coated plate via the adhesive tape. Examples of the articles include exterior parts (in particular, soft rubber hollow parts such as weather strips), body-protecting parts and decorative parts for automobiles.

### [Description of Embodiments]

Hereinafter, the present invention will be described with reference to Examples, but it should be understood that the present invention is not restricted by these Examples.

### (Preparative example of monomer sirup)

A photopolymerization initiator (trade name: "Irgacure 651", manufactured by Ciba Inc.) (0.05 parts by weight) and a photopolymerization initiator (trade name: "Irgacure 184", manufactured by Ciba Inc.) (0.05 parts by weight) were blended with a monomer mixture containing 2-ethylhexyl acrylate (92 parts by weight), and acrylic acid (8 parts by weight); ultraviolet light was irradiated until the viscosity of the mixture (BH viscometer, No.5 rotor, 10 rpm, measurement temperature: 30°C) reached 15 Pa·s, to give a partially polymerized composition (sirup) (hereinafter, referred to as "partially polymerized monomer sirup (A)").

### (Preparative example of monomer sirup 2)

A partially polymerized composition (sirup) was prepared in a manner similar to preparative example of monomer sirup 1, except that 2-ethylhexyl acrylate and acrylic acid were used respectively in amount of 94 parts by weight and 6 parts by weight (hereinafter, referred to as "partially polymerized monomer sirup (B)").

### (Preparative example of monomer sirup 3)

A partially polymerized composition (sirup) was prepared in a manner similar to preparative example of monomer sirup 1, except that 2-ethylhexyl acrylate and acrylic acid were used respectively in amount of 90 parts by weight and 10 parts by weight (hereinafter, referred to as "partially polymerized monomer sirup (C)").

### (Separator used)

A polyethylene terephthalate base (trade name: "MRF", manufactured by Mitsubishi Polyester Film Inc., or trade name: "MRN", manufactured by Mitsubishi Polyester Film Inc.), which is release-treated on one side, was used as the separator.

### (Example 1)

1,6-hexanediol diacrylate (0.08 parts by weight) was added to the partially polymerized monomer sirup (A) (100 parts by weight); and hollow glass microspheres (trade name: "Cel-star Z-27", manufactured by Tokai Kogyo Co., Ltd.) were added thereto in an amount of 0.5 parts by weight with respect to the partially polymerized monomer sirup (A) (100 parts by weight).

A fluorochemical surfactant (trade name "Surflon S-393", manufactured by Seimi Chemical Co., Ltd., an acrylic polymer having polyoxyethylene groups and fluorinated hydrocarbon groups on the side chains, Mw: 8300) was added to the partially polymerized monomer sirup after addition of the hollow glass microspheres in an amount of 0.5 parts by weight, to give a microsphere-containing viscoelastic composition. The rate of the hollow glass microspheres in the entire volume of the microsphere-containing viscoelastic composition was about 1.5 vol %.

The microsphere-containing viscoelastic composition was introduced into the space between the gears of the stator and those of rotor of an apparatus equipped with a disk having a through-hole at the center, a stator having many small gears formed thereon and a rotor having small gears similar to those of the stator formed on the disk, which faces each other, and nitrogen gas was introduced into the microsphere-containing viscoelastic composition through the through-hole, while the rotor was rotated at high speed for mixing the bubbles in the microsphere-containing viscoelastic composition, to give a bubble-mixed microsphere-containing viscoelastic composition. The bubbles were mixed in an amount of about 15 vol % with respect to the total volume of the microsphere-containing viscoelastic composition.

The bubble-mixed microsphere-containing viscoelastic composition was coated on the release-coating face of the separator; the bubble-mixed microsphere-containing viscoelastic composition was photocured by irradiation of ultraviolet ray from a black light lamp (manufactured by Toshiba Corporation.) for 3 minutes at an illuminance (as determined by using a UV Checker "UVR-T1", manufactured by Topcon Corporation, having a maximum sensitivity of approximately 350 nm) of 5 mW, to give a bubble-mixed microsphere-containing pressure-sensitive adhesive layer (thickness: 800 µm).

### (Example 2)

A bubble-mixed microsphere-containing pressure-sensitive adhesive layer (thickness: 800 µm) was prepared in a manner similar to Example 1, except that the partially polymerized monomer sirup (A) was replaced with the partially polymerized monomer sirup (B).

### (Comparative Example 1)

A bubble-mixed microsphere-containing pressure-sensitive adhesive layer (thickness: 800 µm) was prepared in a manner similar to Example 1, except that the partially polymerized monomer sirup (A) was replaced with the partially polymerized monomer sirup (C) and the hollow glass microspheres (trade name: "Cel-star Z-27", manufactured by Tokai Kogyo Co., Ltd.) were added in an amount of 2 parts by weight with respect to 100 parts by weight of the partially polymerized monomer sirup (C).

### (Comparative Example 2)

A bubble-mixed microsphere-containing pressure-sensitive adhesive layer (thickness: 800 µm) was prepared in a manner similar to Example 1, except that the partially polymerized monomer sirup (A) was replaced with the partially polymerized monomer sirup (C) and the hollow glass microspheres (trade name: "Cel-star Z-27", manufactured by Tokai Kogyo Co., Ltd.) were added in an amount of 9.5 parts by weight with respect to 100 parts by weight of the partially polymerized monomer sirup (C).

### (Comparative Example 3)

A bubble-mixed microsphere-containing pressure-sensitive adhesive layer was prepared in a manner similar to Example 1, except that no hollow glass microsphere (trade name: "Cel-star Z-27", manufactured by Tokai Kogyo Co., Ltd.) was added.

The bubble-mixed microsphere-containing pressure-sensitive adhesive layer had bubbles not uniformly dispersed and there were some penetrating pinholes.

### (Evaluation)

### 90° Peel test under 0°C condition

A base-bound one side pressure-sensitive adhesive sheet (base-bound one side adhesion sheet) with its bubble-mixed microsphere-containing pressure-sensitive adhesive layer protected by a separator was prepared, by laminating a PET film having a thickness of 50 µm to each of the bubble-mixed microsphere-containing pressure-sensitive adhesive layer obtained in Examples and Comparative Examples for backing and leaving the resulting protected layer under an atmosphere of 0°C for 30 minutes; after removal of the separator for exposure of the bubble-mixed microsphere-containing pressure-sensitive adhesive layer, the bubble-mixed microsphere-containing pressure-sensitive adhesive layer was adhered to an adherend acid rain-resistant paint plate (trade name: "KINO-1200TW", manufactured by Kansai Paint Co., Ltd.) by one-way pressurization under a 2kg roller, and the composite was aged at 0°C for 20 minutes.

After aging, the base-bound single-face pressure-sensitive adhesive sheet was peeled off to an peeling angle of 90° at a peeling rate of 300 mm/minute in a tensile test machine (trade name: "TCM-1KNB", manufactured by Minebea Co., Ltd) under an atmosphere of 0°C, for determination of the 90° peeling strength under the 0°C condition.

[Table 1]

**Table 1**

| | 2-EHA/AA (by weight) | Addition amount of hollow glass microspheres [parts by weight] | 90° peeling strength under 0°C condition [N/10mm] |
|---|---|---|---|
| Example 1 | 92/8 | 0.5 | 8.7 |
| Example 2 | 94/6 | 0.5 | 8.8 |
| Comparative Example 1 | 90/10 | 2 | 4.2 |
| Comparative Example 2 | 90/10 | 9.5 | 3.7 |
| Comparative Example 3 | 92/8 | 0 | - |

In Table 1, "2-EHA" represents "2-ethylhexyl acrylate", and "AA" represents "acrylic acid". The sample obtained in Comparative Example 3 was not suitable as a pressure-sensitive adhesive layer and thus, its 90° peeling strength under 0°C condition could not be determined.

The results in the Examples above show that the initial adhesiveness at low temperature is higher, demonstrating favorable adhesion. The results in the Comparative Examples above show that the initial adhesive strength at low temperature is lower, indicating unfavorable adhesion.

### [Industrial Applicability]

The acrylic pressure-sensitive adhesive tape according to the present invention or sheet can be used for fixation of automotive exterior parts to automotive coated plates, in particular of weather strip thereto.

## Claims

1. An acrylic pressure-sensitive adhesive tape or sheet, **characterized by** having a bubble-mixed inorganic filler-containing acrylic pressure-sensitive adhesive layer containing an acrylic polymer formed from an acrylic monomer mixture containing an alkyl (meth)acrylate ester (a) having an alkyl group having a carbon number of 1 to 14 and a polar group-containing vinyl monomer (b) at a component rate [(a)/(b)] (by weight) of 95/5 to 91/9, an inorganic filler in the amount at a rate of 0.1 parts by weight or more and less than 2 parts by weight with respect to 100 parts by weight of the all monomer components forming the acrylic polymer and bubbles.

2. The acrylic pressure-sensitive adhesive tape or sheet according to Claim 1, wherein the inorganic filler is at least one inorganic filler selected from the group consisting of hydrophobic silica and hollow glass microspheres.

3. The acrylic pressure-sensitive adhesive tape or sheet according to Claim 1 or 2, wherein the at least one polar group-containing vinyl monomer (b) is acrylic acid.

4. The acrylic pressure-sensitive adhesive tape or sheet according to any one of Claims 1 to 3, used for in fixation of an automotive exterior part to an automobile coated plate.

5. The acrylic pressure-sensitive adhesive tape or sheet according to any one of Claims 1 to 4, wherein the automotive exterior part is a weather strip.
